# EUROPÄISCHE PATENTSCHRIFT

(11) **EP 0 998 399 B1**
(45) Veröffentlichungstag und Bekanntmachung des Hinweises auf die Patenterteilung: **11.09.2002**
(21) Anmeldenummer: 98932166.6
(22) Anmeldetag: 18.06.1998
(51) Int. Cl.: B60B 27/02, F16C 33/80

(54) **NABE, INSBESONDERE FÜR FAHRRÄDER UND DERGLEICHEN**
HUB, ESPECIALLY FOR BICYCLES AND THE LIKE
MOYEU EN PARTICULIER POUR BICYCLETTES ET VEHICULES ANALOGUES

(30) Priorität: 22.07.1997 DE 19731451
(43) Veröffentlichungstag der Anmeldung: 10.05.2000
(73) Patentinhaber: DT Swiss AG, 2500 Biel (CH)
(72) Erfinder: SPAHR, Stefan, CH-2543 Lengau (CH); JÄGER, Gerrit, CH2603 Péry (CH)
(74) Vertreter: Wallinger, Michael, Dr.-Ing.
(86) Internationale Anmeldenummer: EP9803682
(87) Internationale Veröffentlichungsnummer: WO99004988

(56) Entgegenhaltungen:
- EP-A- 0 021 733
- EP-A- 0 021 734
- EP-A- 0 791 482
- DE-A- 3 302 267
- DE-U- 9 419 357
- DE-U- 29 601 861
- US-A- 4 344 659

## Beschreibung

Die vorliegende Erfindung betrifft eine Nabe, die für Fahrräder und dergleichen geeignet ist.

Außer für Fahrräder kann die Nabe auch für andere Anwendungszwecke vorgesehen sein, z. B. bei allen Arten von Anhängern, insbesondere Fahrradanhängern, bei Rollstühlen und dergleichen. Zur Vereinfachung wird die Erfindung aber im folgenden in bezug auf die Anwendung bei Fahrrädern beschrieben, wobei dies keinesfalls als Einschränkung der Anwendung verstanden werden soll.

Naben der hier in Rede stehenden Art, dienen zur Verbindung der feststehenden Radachse mit dem um diese Achse rotierenden Laufrad. Dabei erfolgt die Verbindung zwischen der Nabe und der Felge des Laufrades über Stahlspeichen, wobei üblicherweise zwischen 24 und 36 Speichen verwendet werden, die nach einem vorgegebenen Muster in die Bohrungen der Nabe und der Felge eingezogen werden. Neben diesen Speichen werden heute zunehmend auch Verbindungen verwendet, bei denen nur eine geringe Zahl von z. B. 3 oder 4 Kunststoffabstützungen verwendet werden, oder es werden Scheiben, z. B. Karbonscheiben benutzt.

Insbesondere bei Rädern, die im sportlichen Bereich eingesetzt werden, und ganz besonders bei Rädern für den Einsatz bei Wettkämpfen, werden an die Nabe hohe Anforderungen gestellt. Die Nabe soll einerseits mit möglichst geringem Reibungswiderstand drehen, andererseits soll sie eine weitgehend spielfreie Abstützung ermöglichen, nur in geringem Maße verschmutzen und verschleißen und leicht zu montieren und demontieren sein.

Diese Anforderungen gelten für normale Straßenräder, insbesondere aber auch für Räder, die im Gelände eingesetzt werden und besonders für Mountainbikes, die im schweren Gelände und für Downhill-Rennen eingesetzt werden. Gerade bei Moutainbikes ist mit erheblichen Verschmutzungen der Nabe zu rechnen, die nicht zu einer Beeinträchtigung der Funktion führen darf.

Aus der EP 0 021 733 A1 die dem Gattungsbegriff entspricht und der EP 0 021 734 A1 sind Lagerdichtungen bekannt, die eine Labyrinthdichtung umfassen. Die innere Lauffläche des zu dichtenden Kugellagers ist an einem Ende eines auf die Nabe aufgesetzten zylindrischen Elementes vorgesehen. Benachbart zu der inneren Lauffläche des Kugellagers sind axial beabstandet zwei Ringnuten auf dem zylindrischen Element angeordnet, in die radial von außen zwei Dichtungsringe eines Dichtungselementes berührungslos eingreifen. Durch diese Anordnung entsteht nahe der zentralen feststehenden Achse ein labyrinthartiger Dichtspalt, der den Zutritt von Wasser und Schmutz zu dem Lager im wesentlichen verhindert. Die Abmessungen des Dichtspalts und der Dichtungsringe sind derart gewählt, daß ein kleiner Spalt besteht.

Mit der DE 33 02 267 A1 ist eine Nabe für Fahrräder bekannt geworden, bei der die Abdichtung der beiderseitigen Lager gegen Verschmutzung über eine Labyrinthdichtung erfolgt. Dazu ist auf einem Druckring, der die innere Lagerschale des Kugellagers axial fixiert, ein Nutring aufgepreßt, in dessen Nut ein Lamellenring angeordnet ist, so daß sich ein labyrinthartiger Dichtspalt ergibt.

Aus der DE 296 01 861 U1 ist eine Lageranordnung mit einer Dichtung für ein Fahrrad bekannt geworden, bei der eine berührungslose Labyrinthdichtung vorgesehen ist, um den Drehwiderstand am Nabenkörper zu senken. Durch eine konische Ausgestaltung der Labyrinthdichtung werden eingetretene Verunreinigungen oder Wasser nach außen befördert.

Der vorliegenden Erfindung liegt die Aufgabe zugrunde, eine Nabe für ein Fahrrad zu schaffen, welche die vorgenannten Anforderungen erfüllt und welche insbesondere eine zuverlässige Funktion bei guter Demontierbarkeit aufweist.

Diese Aufgabe wird erfindungsgemäß durch den Gegenstand des Anspruches 1 gelöst. Zu bevorzugende Weiterbildungen der Erfindung sind Gegenstand der Unteransprüche.

Die vorliegende Erfindung schafft eine Nabe mit hoher Funktionssicherheit, da die erfindungsgemäß vorgesehene Dichtungseinrichtung den Zutritt von Wasser und Schmutz in den Nabenkörper und insbesondere den Zutritt zu den Lagereinrichtungen verhindert, oder zumindest weitestgehend vermeidet.

Der Begriff "weitestgehend vermeidet" wurde deshalb gewählt, da eine derartige Dichtung, im physikalischen Sinne gesehen, niemals vollständig dicht sein kann. Die Dichtung ist aber, insbesondere bei den nachfolgend beschriebenen bevorzugten Gestaltungen so ausgebildet, daß ein Zutritt von Nässe und Schmutz während des üblichen Gebrauchs und auch bei der üblichen Reinigung nicht möglich ist.

Die erfindungsgemäße Nabe weist als Vorderradnabe zwei und als Hinterradnabe vorzugsweise 4 Lagereinrichtungen auf. Diese Lagereinrichtungen sind vorzugsweise als handelsübliche Rillenkugellager gestaltet, wobei vorzugsweise besonders reibungsarme Lager und reibungsarme Schmiermittel verwendet werden.

Unter Labyrinthdichtung soll dabei eine Dichtung verstanden werden, bei der sich die gegeneinander relativ bewegenden Dichtflächen nicht berühren, sondern einen kleinen Dichtspalt dazwischen ausbilden. Dieser Dichtspalt wird mindestens einmal, vorzugsweise aber mehrere Male umgelenkt, und zwar vorzugsweise um einen Winkel von ca. 90°, so daß ein Zutritt von Flüssigkeit und Schmutz bei genügend eng gewähltem Dichtspalt praktisch unmöglich ist.

Die Verwendung einer Labyrinthdichtung hat den Vorteil, daß die Dichtung auch bei direktem Auftreffen eines Wasserstrahls nicht beschädigt oder wirkungslos wird. Insbesondere Moutainbikes werden nach dem Einsatz im Gelände regelmäßig mittels eines Hochdruckreinigers gereinigt, der Wasser mit einem Druck bis zu 150 bar auf die zu reinigenden Teile auftreffen läßt. Durch die mehrfache Umlenkung des Dichtspaltes der Labyrinthdichtung wird der beim Auftreffen entstehende Wasserdruck schnell und zuverlässig abgebaut, so daß er die Dichtung nicht beschädigen und das Wasser nicht in die Lager und das Innere der Nabe eindringen kann.

Um eine gute Dichtwirkung zu erzielen, ist es bevorzugt, 3 oder 4 Umlenkungen um ca. 90° vorzunehmen. Es ist aber auch möglich, weniger oder mehr Umlenkungen vorzusehen.

Die Lippendichtung ist als Elastomerdichtung mit einer elastischen Lippe ausgestaltet, und besonders bevorzugt ist die Dichtung im wesentlichen V-förmig gestaltet.

Die elastomere Dichtung ist der Labyrinthdichtung nachgeschaltet. Nachgeschaltet bedeutet, daß die Elastomerdichtung näher am Lager und die Labyrinthdichtung weiter vom Lager entfernt und zur Umgebung hin gerichtet ist.

Dabei ergibt sich, wie vorstehend ausgeführt, der Vorteil, daß der Zutritt von Wasser und Schmutz, z. B. auch bei Verwendung eines Hochdruckreinigers durch die Labyrinthdichtung stark eingeschränkt wird, und daß eventuelle Restmengen an Flüssigkeit, die durch die Labyrinthdichtung in die Nabe eintreten können, durch die Elastomerdichtung am Eindringen in das Lager gehindert werden.

Bei der Verwendung einer Labyrinthdichtung sind die Dichtspalte und alle Flächen, die in Verbindung mit dem Dichtspalt bestehen, derart ausgebildet, daß die bei der Drehung des Nabenkörpers entstehende Zentrifugalkraft ausgenutzt werden kann, um in die Labyrinthdichtung eingedrungenes Wasser nach außen zu fördern.

Beider Kombination der Labyrinthdichtung mit der nachgeschalteten Lippendichtung wird man die Flächen des Dichtspaltes und die Flächen der Elastomerdichtung entsprechend ausbilden, so daß die Förderung von eingedrungenem Wasser nach außen einfach und zuverlässig funktioniert.

Gerade bei Einsätzen einer solchen Nabe für Wettkämpfe ist es unverzichtbar, daß trotz guter Dichtwirkung die Nabe regelmäßig zerlegt wird, um sicherzustellen, daß sich die Lager in optimalem Zustand befinden. Bei herkömmlichen Naben sind zum Teil komplizierte Spezialwerkzeuge erforderlich, um das Zerlegen zu ermöglichen, was die Wartung erschwert.

Gemäß einer Weiterbildung der Erfindung ist die Nabe so gestaltet, daß sie ohne oder weitestgehend ohne Werkzeug, oder zumindest ohne Spezialwerkzeug, zerlegt werden kann.

Dies wird gemäß einer bevorzugten Ausführungsform der Erfindung dadurch erreicht, daß das Lager über ein Anschlagtei (Anschlagelement) gehalten wird, das vorzugsweise selbst lediglich durch Reibung gehalten ist. Vorzugsweise ist das Anschlagteil rotationssymmetrisch zur Achse selbst gestaltet und auf diese aufgeschoben, wobei die Haltefunktion dann durch einen Reibungswiderstand zwischen Anschlagteil und Achse erzeugt wird. Vorzugsweise wird die Haltefunktion durch einen Dichtungsring, vorzugsweise ein konventioneller O-Ring, erzeugt, der gleichzeitig eine Dichtung bezüglich Anschlagteil und Achse bewirkt.

Die Gestaltung hat den Vorteil, daß das Anschlagteil mit dem Dichtring ohne Werkzeug auf die Achse aufgesetzt und von dieser abgezogen wird. Gleichzeitig kann durch entsprechende Gestaltung des Dichtringes ein hohes Haltemoment erreicht werden, das das Anschlagteil zuverlässig auf der Achse hält.

Nur ergänzend sei darauf hingewiesen, daß das Anschlagteil bei dieser Gestaltung so beschaffen ist, daß es im eingebauten Zustand der Nabe an den Innenseiten der Ausfallenden, in denen die Nabe in der Vorderradgabel bzw. im Hinterbau gehalten ist, und damit dann durch die Verschraubung bzw. die Schnellspanneinrichtung, die die Achse und die Nabe im Ausfallende hält, gesichert ist.

Bei einer Hinterradnabe ist in die Nabe üblicherweise-eine Freilaufeinrichtung integriert.

Die erfindungsgemäße Gestaltung erlaubt die Verwendung jeder konventionellen Freilaufeinrichtung. Besonders bevorzugt wird aber eine Freilaufeinrichtung verwendet, wie dies im deutschen Gebrauchsmuster G 94 19 357.6 der Anmelderin beschrieben ist.

Weitere Vorteile, Merkmale und Anwendungsmöglichkeiten der vorliegenden Erfindung ergeben sich aus der nachfolgenden Beschreibung eines Ausführungsbeispieles mit der Zeichnung.

Darin zeigt:
- Fig. 1: ein Ausführungsbeispiel der erfindungsgemäßen Nabe für ein MountainbikeHinterrad; und
- Fig. 2a: einen vergrößerten Ausschnitt der Darstellung gemäß Figur 1
- Fig. 2b: einen vergrößerten Ausschnitt der Darstellung gemäß Figur 1
- Fig. 3: ein weiteres Ausführungsbeispiel einer erfindungsgemäßen Nabe für ein Mountainbike-Vorderrad.

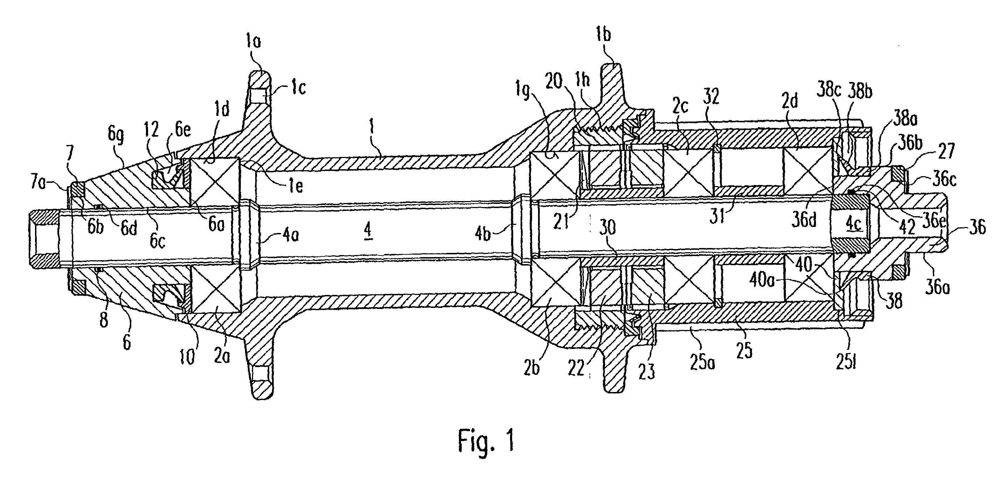

Figur 1 zeigt in einer Schnittdarstellung ein Nabengehäuse 1, welches mit Flanschen 1a und 1b versehen ist, die Bohrungen 1 c zur Aufnahme von Speichen aufweisen.

Bei praktisch allen Fahrrädern ist das Ritzel für den Antrieb bzw. das Ritzelpaket für eine Kettenschaltung an der in Fahrtrichtung rechten Seite des Rades angeordnet. Dementsprechend wird hier im folgenden auch vom linken und vom rechten Teil der Nabe gesprochen, wobei rechts der Orientierung der Figur 1 entspricht.

Im linken Bereich der Nabe weist das Gehäuse eine zylindrische Lagerbohrung 1d auf, die von der Nabenmitte abgewandt geöffnet ist und in der ein herkömmliches Rillenkugellager 2a angeordnet ist, welches in der Figur nur schematisch dargstellt ist. Der äußere Laufring des Rillenkugellagers stützt sich auf der zylindrischen Lagerbohrung 1d und der innere Laufring auf einer Achse 4 ab. Diese Achse 4 ist beim Ausführungsbeispiel aus Stahl gefertigt und weist einen umlaufenden Anschlag 4a auf, an dem der innere Laufring des Wälzlagers 2 unverschieblich anliegt.

Das Wälzlager wird in dieser Positon durch ein linkes Anschlagelement 6 gehalten, welches im wesentlichen rotationssymmetrisch gestaltet ist und außen kegelig, mit sich zur Nabenmitte erweiternden Durchmesser und innen zylindrisch gestaltet ist.

Das linke Anschlagelement 6 liegt mit einer unteren ringförmigen Kante 6a am inneren Laufring des Wälzlagers an und nimmt an der Drehbewegung des Nabenkörpers nicht teil.

In dem im montierten Zustand dem Ausfallende zuweisenden Ende mit kleinerem Durchmesser ist ein zylindrisch Ansatz 6b vorgesehen, auf welchem eine aus Stahl bestehende Zahnscheibe 7 aufgelegt ist, die eine zum Ausfallende weisende Verzahnung 7a aufweist.

In der zylindrischen Innenbohrung 6c des linken Anschlagteils 6 ist ein ringförmiger Einstich 6d vorgesehen, in dem ein O-Ring 8 aufgenommen ist. Die Abmessungen des O-Ringes 8 und des Einstiches 6d sind derart aufeinander abgestimmt, daß zwischen O-Ring und Achse eine Reibkraft erzeugt wird, die bewirkt, daß das Anschlagteil auf der Achse hält, aber ohne besonderes Werkzeug von der Achse abgezogen und auf diese wieder aufgesetzt werden kann.

Das linke Anschlagelement 6 ist mit einem zum Wälzlager weisenden, im Querschnitt trapezförmigen umlaufenden Einschnitt 6e versehen, dessen Außenfläche 6f im wesentlichen parallel zur Außenfläche 6g des Anschlagelements ist und dessen Innenfläche 6h zylindrisch und rotationssymmetrisch zur Achse 4 ausgebildet ist, wobei die Außenfläche 6f und die Innenfläche 6h durch eine senkrecht zur Achse 4 verlaufende Ringfläche 6i verbunden sind.

Zwischen der zylindrischen Fläche 6h dieser trapezförmigen Ausnehmung und der zylindrischen Ausnehmung 1d des Nabenkörpers ist ein Anschlagring 10 vorgesehen, welcher am äußeren Laufring des Wälzlagers und an der Fläche 1d anliegt und mit dieser rotiert.

Der Anschlagring 10 hat einen umlaufenden, in die Ausnehmung hereinragenden Vorsprung 10a, welche nach innen hin durch eine zylindrische, zur Achse rotationssymmetrische Fläche und nach außen hin durch eine konische, zur Fläche 6f und zur Außenfläche 6g des Anschlags parallel verlaufende Fläche begrenzt ist. Die beiden Flächen sind durch eine Fläche verbunden, die senkrecht zur Achse 4 verläuft.

Innerhalb der trapezförmigen Ausnehmung 6e ist eine im wesentlichen V-förmige Elastomerdichtung 12 vorgesehen, wobei die Dichtung so gestaltet ist, daß ein Arm 12a des V rechtwinkling gestaltet ist und an den Flächen der Ausnehmung 6i und an der zylindrischen Fläche 6h anliegt und wobei der zweite Arm 12b des V gegenüber der inneren zylindrischen Fläche mit einem spitzen Winkel geneigt ist und sich nach oben hin verjüngt. Die Öffnung des V weist radial nach außen. Die sich verjüngende Spitze 12b des zweiten Arms des V bildet eine Lippendichtung, welche mit einer oberen schmalen Fläche am Vorsprung 10a der Scheibe 10 abstützt.

Durch das Anschlagteil 6, den Nabenkörper 1 und die Scheibe 10 sowie den Vorsprung 10a wird ein Labyrinthdichtung geschaffen. Der Dichtspalt 13a ist senkrecht zur Achse 4 und wird von einer vorderen Fläche 6j des Anschlagteils 6 und von einer vorderen Fläche 1e des Nabenkörpers begrenzt. Rechtwinklig zur Fläche 6j ist eine zylindrische Fläche 6k vorgesehen, die gemeinsam mit der zylindrischen Fläche 1d einen Dichtspalt 13b begrenzt, der senkrecht zum Dichtspalt 13a und damit parallel zur Achse verläuft. An die zylindrische Fläche 6k schließt sich eine weitere Ringfläche 6l an, die senkrecht zur Achse 4 verläuft und die gemeinsam mit dem oberen Bereich der Scheibe 10, deren Fläche ebenfalls senkrecht zur Achse ist, einen senkrecht zur Achse verlaufenden Dichtspalt 13c begrenzt.

Im stumpfen Winkel zur Fläche 6k ist die die Ausnehmung 6e nach außen begrenzende Fläche 6f angeordnet, die mit der ebenfalls nach außen weisenden Fläche 10a des Vorsprunges der Scheibe 10 einen im stumpfen Winkel zum Spalt 13c verlaufenden Dichtspalt 13d begrenzt.

### Die Funktion dieses Teils der Nabe ist wie folgt:

Bei der Montage wird zunächst die Achse 4 in den Nabenkörper 1 eingelegt. Dann wird das Wälzlager 2a auf die Achse aufgeschoben, und liegt mit dem inneren Laufring am Anschlag 4a und mit dem äußeren Laufring an einem Anschlag 1e des Nabenkörpers an.

Anschließend wird der Ring 10 aufgeschoben und die V-förmige Dichtung sowie der O-Ring 6d in das Anschlagteil 6 eingelegt. Der Anschlag wird dann auf die Achse aufgesteckt und hält das Wälzlager fest.

Zur Wartung des Wälzlagers muß lediglich das Teil 6 abgenommen werden, dann ist das Wälzlager frei zugänglich und kann von der Achse abgenommen werden.

Die labyrinthartige Dichtung, gebildet durch die Spalten 13a, b, c, d verhindert den Zutritt von Wasser und Staub in hohem Maße. Da die Dichtung berührungsfrei arbeitet, entsteht keine Reibung. Aufgrund der mehrfachen Umlenkung des Dichtspaltes ist es auch für einen direkt auftreffenden Wasserstrahl aus dem Hochdruckreiniger nicht möglich, in die Ausnehmung 6e einzutreten.

Falls doch Wasser in die Ausnehmung 6e eintritt, wird dies durch die berührende Elastomerdichtung zuverlässig daran gehindert, bis zum Lager vorzudringen. Aufgrund des besonderen Schutzes der Elastomerdichtung durch die Labyrinthdichtung gibt es keinen direkten Wassereintritt in die Ausnehmung 6e und damit auch keine Druckbelastung der Lippe 12 mit einem Wasserstrahl. Die Lippe 12 kann deshalb mit geringerer Elastizität und geringerer Andruckkraft gestaltet werden, als dies sonst möglich wäre, wodurch die Reibung zwischen der Lippe und dem Ring weiter verringert wird.

Sollte trotz der Labyrinthdichtung Wasser in die Ausnehmung 6e eindringen, so wird dieses Wasser durch die Zentrifugalbewegung des Ringes und der rotierenden Wandung des Dichtspaltes wieder nach außen gefördert.

Im rechten Teil der Nabe ist eine zylindrische Ausnehmung 1g, die der zylindrischen Ausnehmung 1d entspricht und die ein Wälzlager 2b aufnimmt, das dem Wälzlager 2a entspricht. In entsprechender Weise ist auch ein Anschlag 4b vorgesehen, an dem sich der innere Laufring des Wälzlagers abstützt.

In einen weiteren zylindrischen Ansatz 1h, dessen Durchmesser größer ist als der Ansatz 1g ist ein Gewindering 20 eingeschraubt, der im Zusammenwirken mit einer Feder 21, einer ersten Zahnscheibe 22 und einer zweiten Zahnscheibe 23 einen Freilauf bildet.

Die Gestaltung dieses Freilaufs ist im einzelnen im Gebrauchsmuster G 94 19 357.6 auf den Seiten 2 - 5 beschrieben und diese Beschreibung wird durch diesen Verweis in die vorliegende Anmeldung mit einbezogen.

Eine weitere Erläuterung der Funktion dieses Freilaufes ist deshalb nicht erforderlich.

An den Nabenkörper 1 anschließend ist ein Rotor 25 vorgesehen, der eine Verzahnung 25a aufweist, in die entsprechend gestaltete Ausnehmung eines (nicht dargestellten) Ritzelpakets eingreifen.

Der Rotor 25 ist ebenfalls aus Aluminium oder aus einer sonstigen Leichtmetallegierung, wie Titan und dergleichen gestaltet. Der Rotor rotiert während der Antriebsbewegung mit gleicher Drehzahl wie der Nabenkörper 1 und steht bei Stillstand des Kurbelantriebs still, so daß sich der Nabenkörper 1 dann in bezug auf den Rotor 25 bewegt.

Der Rotor stützt sich über ein Wälzlager 2c und ein Wälzlager 2d auf der Achse 4 ab, wobei diese Wälzlager wiederum dieselben Abmessungen aufweisen, wie die Wälzlager 2a und 2b.

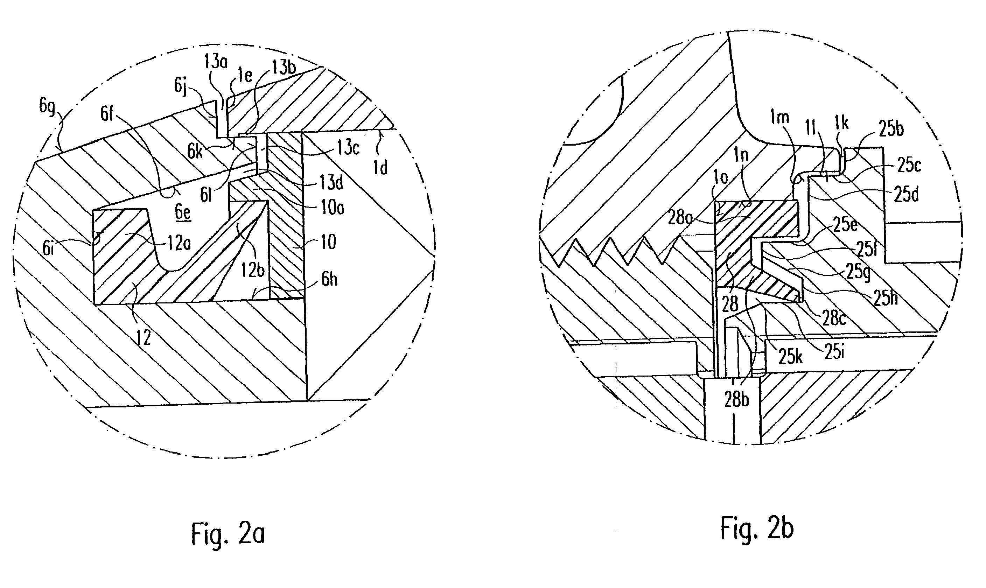

Zwischen dem Nabenkörper 1 und dem Rotor 25 ist eine Labyrinthdichtung mit nachgeschalteter Elastomerdichtung ausgebildet, die nun in Bezugnahme auf die Figur 2b beschrieben wird.

Der Nabenkörper 1 weist eine zur Achse 4 senkrecht verlaufende ringförmige Wandung 1k auf, an die sich im Winkel von 90° eine zylindrische Wand 1l anschließt, die parallel zur Achse verläuft. Daran schließt sich wiederum senkrecht eine weitere Kreisringfläche 1m an, die ebenfalls um 90° in einen zylindrischen Bereich 1n übergeht, an den sich eine senkrechte Wand 1o anschließt. Die kreisringförmige Wand 1o und die zylindrische Wand 1n schließen eine Ausnehmung ein, in der eine Elastomerdichtung 28 aufgenommen ist. Diese Elastomerdichtung ist V-förmig gestaltet und weist ein im wesentlichen rechteckiges Querschnittsteil 28a auf, das einen Arm des Vs bildet und ein sich daran anschließendes spitz zulaufendes Teil 28b, dessen vordere Spitze 28c eine Lippendichtung bildet.

Der Rotor weist (radial von außen nach innen gesehen) an der Kontaktstelle zum Nabenkörper eine zur Achse 4 senkrechte Kreisringfläche 25b auf, eine dazu im Winkel von 90° angeordnete, zum Rotor weisende zylindrische Außenfläche 25c, eine weitere Kreisringfläche 25d, eine sich daran anschließende zylindrische Außenfläche 25e und dann wiederum eine Kreisringfläche 25f auf.

An die Kreisringfläche 25f anschließend ist im Querschnitt im stumpfen Winkel eine konische Fläche 25g vorgesehen, an die sich eine Kreisringfläche 25h anschließt, an die sich wieder eine konisch verlaufende Wand 25i im Querschnitt im stumpfen Winkel anschließt.

Die Wandungen 25g, 25i umschließen eine Ausnehmung 25k. In diese Ausnehmung 25k greift die Dichtung 28 derart ein, daß die Spitze 28c des einen V-Armes auf der Fläche 25i aufliegt. Die Flächen 1k, 1l, 1m sowie die jeweils gegenüberliegenden Flächen 25b, 25c, 25d bilden eine Labyrinthdichtung.

Die Funktion dieser Dichtung und der nachgeschalteten Elastomerdichtung entspricht der Funktion der-zuvor beschriebenen Dichtung am linken Anschlagelement 6. Da-dieser Teil der Nabe im Betrieb durch das Ritzelpaket geschützt ist, werden hier weniger Umlenkungen für die Labyrinthdichtung benötigt, als beim linken Anschlagelement 6. In gleicher Weise wird auch beim linken Teil der Nabe bei einer Rotation die Flüssigkeit nach außen gefördert, wobei bei dieser Dichtung im Gegensatz zur Dichtung im Anschlagelement 6, auch die Elastomerdichtung selbst mitrotiert und somit die an ihr haftende Flüssigkeit ebenfalls mit nach außen abgeschleudert wird.

Die Lager 2b und 2c sind durch einen zylindrischen Ring 30 im Abstand zueinander gehalten. Ein entsprechender zylindrischer Ring 31 ist zwischen dem Lager 2c und dem ganz rechts gelegenen Lager 2d vorgesehen. Um den Außenring des Lagers 2c in bezug auf den Rotor zu halten, ist ein Sprengring 32 vorgesehen, der sich am äußeren Laufring des Lagers 2c abstützt.

Am rechten Teil der Nabe ist ein rechtes Anschlagselement 36 vorgesehen, welches aus einem zylindrischen Ansatz 36a besteht, der im Ausfallende aufgenommen wird und einem zylindrischen Ansatz 36b mit größerem Druchmesser, der einen weiteren zylindrischen Ansatz 36c aufweist, in den in gleicher Weise wie beim linken Anschlagelement ein Zahnring 27 aufgenommen ist, der aus Stahl besteht und das Anschlagelement am Ausfallende abstützt.

Benachbart zur zylindrischden Fläche 36b ist, in Richtung auf den Nabenkörper 1 hin, ein weiterer zylindrischer Ansatz 36d mit etwas kleinerem Durchmesser als der Ansatz 36b vorgesehen, in dem eine Dichtung 38 aufgenommen ist. Diese Elastomerdichtung weist als Grundkörper einen Ring mit im wesentlichen rechteckigem Querschnitt 38a auf, zu dem sich in etwa im Winkel von 45° eine Dichtungslippe 38b radial nach außen erstreckt, die zu einer Spitze 38c hin spitz zuläuft.

Die Spitze 38c stützt sich an einem Anschlagring 40 ab, der in einer zylindrischen Ausnehmung 251 des Rotors 25 gehalten ist und einen zylindrischen radialen Ansatz 40a aufweist, der sich parallel zur Achse 4 erstreckt und auf dem die Fläche 38c des vorderen Teils der Dichtung 38 aufliegt.

In gleicher Weise wie beim linken Anschlagelement ist beim rechten Anschlagelement ein Einstich 36e vorgesehen, in dem eine O-Ring-Dichtung 42 aufgenommen ist. Diese O-Ring-Dichtung ist im Hinblick auf den Einstich 36e derart bemessen, daß sie das rechte Anschlagelement durch Reibung auf der Achse hält.

Der Zusammenbau des rechten Teils der Nabe entspricht im wesentlichen dem Zusammenbau des linken Teils: die Wälzlager 2b, die Einrichtung für den Freilauf und das Wälzlager 2c werden auf die Achse aufgeschoben. Anschließend wird der Rotor mit dem eingesetzten Sprengring aufgesetzt und der zylindrische Ring 31 und das Wälzlager 2d sowie der Ring 40 aufgeschoben. Dann kann das Anschlagelement mit der Dichtung aufgesteckt werden und hält durch die Reibkraft des O-Rings auf der Achse fest. Ein besonderes Werkzeug oder eine Verriegelung der einzelnen Teile zueinander ist nicht erforderlich.

Für die Montage in das Fahrrad wird durch die längs verlaufende Bohrung 4c der Achse ein herkömmlicher Schnellspanner oder eine entsprechende Befestigungseinrichtung eingeschoben und die Nabe derart im Fahrrad befestigt, daß die inneren Flächen der Ausfallenden an den Zahnscheiben 7 und 37 anliegen. Dadurch wird die Nabe während des Betriebes zuverlässig zusammengehalten.

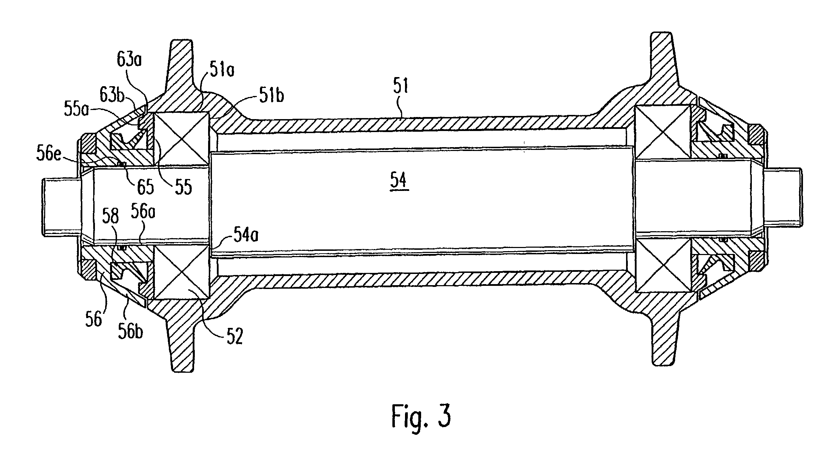

In bezug auf die Figur 3 wird nun eine Vorderradnabe für ein Mountainbike beschrieben.

Die Vorderradnabe ist symmetrisch aufgebaut, so daß es genügt, den linken Teil der Nabe zu beschreiben.

Der insgesamt mit 51 bezeichnete, im wesentlichen hohlzylindrische Nabenkörper weist zu beiden Seiten eine zylindrische Ausnehmung 51a auf. In den Nabenkörper ist eine hohlgebohrte Achse 54 eingelegt, die an beiden Seiten im Bereich der zylindrischen Ausnehmung 51a einen Absatz 54a aufweist.

Dieser Absatz 54a bildet eine Anschlagschulter für den inneren Laufring eines Wälzlagers 52. Der äußere Laufring stützt sich an der Schulter 51b der zylindrischen Ausnehmung 51 a ab. Das Wälzlager 52 ist durch einen Ring 55 abgedeckt, dessen Querschnitt nach radial außen hin durch ein trapezförmiges Teil 55a erweitert ist.

Das linke Anschlagelement 56 weist eine zylindrische Bohrung 56a auf und erweitert sich nach außen konisch mit einer Umfangsfläche 56b, wobei sich der Konus zur Mitte des Nabenkörper 51 hin erweitert.

in dieses Anschlagelement 56 ist eine trapezförmige Ausnehmung 56a eingelassen, an der eine elastomere Dichtung 58 angeordnet ist.

Diese Dichtung 58 entspricht der Dichtung 12, die zuvor beschrieben wurde und der Ring 55 entspricht im wesentlichen der Form des Ringes 10, so daß weitere Erörterungen diesbezüglich nicht erforderlich sind.

In ähnlicher Weise wie bei der zuvor beschriebenen Hinterradnabe ist eine Labyrinthdichtung vorgesehen, wobei hier ein senkrecht zur Nabe verlaufender Dichtspalt 63a vorgesehen ist, an den sich im stumpfen Winkel ein Dichtspalt 63b anschließt.

Das linke Anschlagelement weist einen Einstich 56e auf, in dem ein O-Ring 65 in gleicher Weise angeordnet ist, wie bei der Hinterradnabe.

Zusammenbau und Funktion der Vorderradnabe entsprechen dem Zusammenbau und der Funktion des linken Teils der Hinterradnabe, so daß weitere Erörterungen diesbezüglich nicht erforderlich sind.

Es wird jedoch darauf hingewiesen, daß auch bei der Vorderradnabe eine Gestaltung des Dichtspaltes vorgenommen werden kann, wie dies in bezug auf die Figur 1 für die Hinterradnabe erläutert worden ist, d. h., daß weitere Umlenkungen des Dichtspaltes erfolgen, wie dies zuvor erläutert wurde. Ferner ist es ebenfalls möglich, eine vereinfachte Dichtspaltgestaltung, wie sie im Zusammenhang mit der Vorderradnabe in Figur 3 erläutert wurde, auch bei einer Hinterradnabe, wie sie in Figur 1 gezeigt wurde, anzuwenden.

## Patentansprüche

1. Nabe für Fahrräder und dergleichen mit
einer Achse (4, 54),
einem um diese Achse (4, 54) rotierenden Nabenkörper (1, 51)
einer Lagereinrichtung, welche wenigstens zwei Lager (2a, 2b, 2c, 2d, 52) umfaßt und diesen Nabenkörper (1, 51) derart auf dieser Achse (4, 54) abstützt, daß eine Relativdrehung des Nabenkörpers (1, 51) bezüglich der Achse (4, 54) möglich ist, wobei wenigstens eine Dichtungseinrichtung vorgesehen ist, die sowohl wenigstens eine Labyrinthdichtung als auch wenigstens eine Lippendichtung (12, 28, 58) aufweist,
**dadurch gekennzeichnet,**
**daß** zur weitestgehenden Verhinderung des Eindringens von Wasser und Schmutz zu dieser Lagereinrichtung diese Labyrinthdichtung wenigstens einen Dichtspalt (13a, 13b, 13c, 13d, 63a, 63b) umfaßt, welcher derart ausgebildet ist, daß eindringendes Wasser durch die bei der Drehung des Nabenkörpers entstehende Zentrifugalkraft nach außen gefördert wird, und daß die Lippendichtung (12, 28, 58) näher am Lager angeordnet ist als die Labyrinthdichtung.

2. Nabe gemäß Anspruch 1,
**dadurch gekennzeichnet,**
**daß** die Achse (4, 54) derart gestaltet ist, daß sie sich im eingebauten Zustand nicht dreht.

3. Nabe gemäß Anspruch 2,
**dadurch gekennzeichnet,**
**daß** ein Anschlagelement (6, 36, 56) vorgesehen ist, welches auf diese feststehende Achse (4, 54) aufgesetzt ist und welches mit diesem Nabenkörper (1, 51) diesen labyrinthartigen Dichtspalt (13a, 13b, 13c, 13d, 63a, 63b) ausbildet.

4. Nabe gemäß Anspruch 3, **dadurch gekennzeichnet,**
**daß** dieses Anschlagelement (6, 36, 56) diese Lippendichtung (12, 28, 58) aufweist, welche in dieses Anschlagelement (6, 36, 56) koaxial zu der festen Achse (4, 54) aufgenommen ist und deren Lippe (12b, 28b) sich an einem mit dem Nabenkörper (1, 51) drehenden Tei (10) abstützt.

5. Nabe gemäß Anspruch 4, **dadurch gekennzeichnet,**
**daß** dieses drehende Teil ein Zwischenring (10) ist, welcher sich mit diesem Nabenkörper (1, 51) dreht und welcher einen in die Richtung dieser Lippe (12b, 28b) ragenden ringförmigen Vorsprung (10a) aufweist, an welchem sich die Lippe (12b, 28b) abstützt.

6. Nabe gemäß einem der Ansprüche 3 oder 4, **dadurch gekennzeichnet,**
**daß** dieses Anschlagelement (6, 36, 56) eine weitere Dichtung (8, 42, 65) aufweist, mit der das Anschlagelement (6, 36, 56) gegenüber der feststehenden Achse (4, 54) abgedichtet ist.

7. Nabe gemäß Anspruch 6, **dadurch gekennzeichnet,**
**daß** diese weitere Dichtung (8, 42, 65) derart gestaltet ist, daß sie dieses Anschlagelement (6, 36, 56) mit einer vorbestimmten Kraft auf dieser feststehenden Achse (4, 54) hält, wobei diese Kraft derart bemessen ist, daß das Anschlagelement (6, 36, 56) von Hand von der Achse (4, 54) abziehbar und auf diese aufsetzbar ist.

8. Nabe gemäß einem der Ansprüche 3 bis 7, **dadurch gekennzeichnet,**
**daß** dieses Anschlagelement (6, 36, 56) aus Leichtmetall besteht und Metallverbindungen enthält, die aus einer Gruppe ausgewählt sind, die Aluminium, Magnesium und Titan umfassen.

9. Nabe gemäß Anspruch 8, **dadurch gekennzeichnet,**
**daß** dieses Anschlagelement (6, 36, 56) an der dem Nabenkörper (1, 51) abgewandten Seite mit einem Stahlring (7, 27) verstärkt ist.

## Claims

1. A hub for bicycles and similar contrivances, comprising
an axle (4, 54),
a hub body (1, 51) rotating about said axle (4, 54),
a bearing means comprising at least two bearings (2a, 2b, 2c, 2d, 52) and supporting said hub body (1, 51) on the axle (4, 54) in such a manner that a relative rotation of the hub body (1, 51) is possible relative to the axle (4, 54),
at least one sealing means being provided having at least one labyrinth seal as well as at least one lip seal (12, 28, 58),
**characterized in that**,
for the highest degree of preventing water and dirt from penetrating into said bearing means, said labyrinth seal comprises at least one sealing gap (13a, 13b, 13c, 13d, 63a, 63b), which is configured such that penetrating water is transported to the outside by the centrifugal force arising due to the rotation of the hub body, and **in that** the lip seal (12, 28, 58) is arranged closer to the bearing than the labyrinth seal.

2. The hub according to claim 1,
**characterized in that**
the axle (4, 54) is configured such that it does not rotate in the installed state.

3. The hub according to claim 2,
**characterized in that**
a stopper element (6, 36, 56) is provided, which is placed onto said non-rotational axle (4, 54), and which, jointly with said hub body (1, 51), forms said labyrinth-type sealing gap (13a, 13b, 13c, 13d, 63a, 63b).

4. The hub according to claim 3, **characterized in that**
said stopper element (6, 36, 56) comprises said lip seal (12, 28, 58), which is received in said stopper element (6, 36, 56) coaxially to the non-rotational axle (4,54), and the lip (12b, 28b) thereof supports against a part (10) rotating with the hub body (1, 51).

5. The hub according to claim 4, **characterized in that**
said rotating part is an intermediate ring (10), which rotates with said hub body (1, 51), and which comprises an annular projection (10a) protruding into the direction of said lip (12b, 28b), against which projection supports the lip (12b, 28b)

6. The hub according to claim 3 or 4, **characterized in that**
said stopper element (6, 36, 56) comprises a further seal (8, 42, 65), by means of which the stopper element (6, 36, 56) is sealed with respect to the non-rotational axle (4, 54).

7. The hub according to claim 6, **characterized in that**
said further seal (8, 42, 65) is configured such that it holds said stopper element (6, 36, 56) with a predetermined force on said non-rotational axle (4, 54), said force being rated such that the stopper element (6, 36, 56) can be manually pulled off from or placed onto the axle (4, 54).

8. The hub according to any one of claims 3 through 7, **characterized in that**
said stopper element (6, 36, 56) is comprised of light metal and comprises metal compounds selected from a group comprising aluminum, magnesium and titanium.

9. The hub according to claim 8, **characterized in that**
said stopper element (6, 36, 56), on its side facing away from the hub body (1, 51), is reinforced by a steel ring (7, 27).

## Revendications

1. Moyeu pour bicyclettes et mécanismes similaires, comprenant
un essieu (4, 54),
un corps de moyeu (1, 51) tournant autour dudit essieu (4, 54),
un moyen de roulement comprenant au moins deux roulements (2a, 2b, 2c, 2d, 52) et appuyant ledit corps de moyeu (1, 51) sur ledit essieu (4, 54) de telle façon qu'une rotation relative du corps de moyeu (1, 51) soit possible par rapport à l'essieu (4, 54),
au moins un moyen d'étanchéité étant prévu comprenant non seulement au moins une bague à labyrinthe mais aussi au moins une bague à lèvre (12, 28, 58),
**caractérisé en ce que**,
pour empêcher au maximum à l'eau et à la saleté de pénétrer dans ledit moyen de roulement, ladite bague à labyrinthe comprend au moins une fente d'étanchéité (13a, 13b, 13c, 13d, 63a, 63b), qui est configurée de manière à ce que l'eau pénétrante est transportée à l'extérieur par la force centrifuge résultant lors de la rotation du corps de moyeu, et **en ce que** la bague à lèvre (12, 28, 58) est disposée plus près du roulement que la bague à labyrinthe.

2. Moyeu selon la revendication 1,
**caractérisé en ce que**
l'essieu (4, 54) est configuré de manière à ne pas tourner à l'état installé.

3. Moyeu selon la revendication 2,
**caractérisé en ce**
**qu'**un élément de butée (6, 36, 56) est prévu qui est placé sur ledit essieu fixe (4, 54) et qui forme ladite fente d'étanchéité (13a, 13b, 13c, 13d, 63a, 63b) du type labyrinthe avec le corps de moyeu (1, 51).

4. Moyeu selon la revendication 3,
**caractérisé en ce que**
ledit élément de butée (6, 36, 56) comprend ladite bague à lèvre (12, 28, 58) qui est reçue dans ledit élément de butée (6, 36, 56) de manière coaxiale à l'essieu fixe (4, 54) et dont la lèvre (12b, 28b) s'appuie contre un élément (10) tournant avec le corps d'essieu (1, 51).

5. Moyeu selon la revendication 4,
**caractérisé en ce que**
ledit élément tournant est une bague intermédiaire qui tourne avec ledit corps de moyeu (1, 51) et qui comporte une projection annulaire (10a) faisant saillie dans la direction de ladite lèvre (12b, 28b) et contre laquelle s'appuie la lèvre (12b, 28b).

6. Moyeu selon l'une quelconque des revendications 3 ou 4,
**caractérisé en ce que**
ledit élément de butée (6, 36, 56) comprend encore une autre bague d'étanchéité (8, 42, 65) par laquelle l'élément de butée (6, 36, 56) est rendu étanche par rapport à l'essieu fixe (4, 54).

7. Moyeu selon la revendication 6,
**caractérisé en ce que**
ladite autre bague d'étanchéité (8, 42, 65) est configurée de manière à ce qu'elle tienne ledit élément de butée (6, 36, 56) sur ledit essieu fixe (4, 54) avec une force prédéterminée, ladite force étant mesurée de manière à ce que l'élément de butée (6, 36, 56) puisse être démonté et remonté manuellement de/sur l'essieu (4, 54).

8. Moyeu selon l'une quelconque des revendications 3 à 7,
**caractérisé en ce que**
ledit élément de butée (6, 36, 56) est constitué d'un métal léger et contient des composants métalliques choisis d'un groupe qui comprend de l'aluminium, du magnésium et du titane.

9. Moyeu selon la revendication 8,
**caractérisé en ce que**
ledit élément de butée (6, 36, 56) est renforcé d'une bague d'acier (7, 27) sur le côté détourné du corps de moyeu (1, 51).
